# EUROPEAN PATENT APPLICATION

(11) **EP 3 124 339 A1**
(43) Date of publication of application: **01.02.2017**
(21) Application number: 16176861.9
(22) Date of filing: 29.06.2016
(51) Int. Cl.: B60S 3/04

(54) **DEVICE FOR WASHING OF VEHICLES IN SELF-SERVICE FACILITIES**

(30) Priority: 31.07.2015 ES 201530904 U
(71) Applicant: Istobal S.A., 46250 L'Alcúdia (Valencia) (ES)
(72) Inventor: TOMAS PUCHADES, Yolanda, 46250 LA ALCUDIA (Valencia) (ES)
(74) Representative: Ungria López, Javier

(57) **Abstract**

Device for washing of vehicles in self-service facilities, which comprises a boom (1) with a rigid section attached to a rail (8) by means of an element which moves along the rail (8). The rigid section is formed of a straight section (2), an intermediate flexible section (4) and a curved section (3). A continuous flexible hose (7) runs along all the sections (2, 3, 4) of the boom (1) such that one end of the flexible hose (7) extends from the free end of the straight section (2) to connect to a fixed hydraulic conduit in the facilities by means of a joint (5), and the other end of the flexible hose (7) extends from the free end of the curved section (3) of the boom (1) to connect to a cleaning element.

## Description

### OBJECT OF THE INVENTION

This invention refers to a device applicable to vehicle washing facilities, the purpose of which is to allow the use of washing elements, such as pressure guns, brushes and other elements connected to the end of a hose. The device is installed through the ceiling of the facility or, at least, through an area above the vehicle to be washed, facilitating the movement or rotation thereof without interfering with each other when at least two of these devices are used or installed. These devices are known in the language of the sector as *booms.*

### TECHNICAL PROBLEM TO ADDRESS AND BACKGROUND OF THE INVENTION

One of the principal objectives of the technology used in self-service vehicle washing facilities is to prevent the hose with pressure guns from becoming tangled with each other or blocked when used. To prevent this, devices formed by a rail are used; these are positioned on a higher level than the vehicle, normally in the ceiling of the facility. Attached to this rail by means of a joint is a rotating arm, which is known as a boom in the sector. The boom is connected on the joint side to a hydraulic connection which supplies water. The other end is connected to a flexible hose incorporating the pressure gun for washing the vehicle, a brush or any other cleaning element. The boom can rotate and even move along the rail to access the different sides of the vehicle.

The booms which exist in the current state of the art are formed of several parts with special shapes, through which the liquid conduit passes. For this purpose, a variety of connections is used as far as the upper joint fixing the boom, where a connection with the fixed conduit of the facility is established again.

Document ES-1045290_U is an example of one of these facilities. This document describes a device for self-service vehicle washing facilities formed of a rail, which serves as support for the coupling of rotating arms or booms by means of a joint which, in addition to allowing the booms to rotate, also allows them to move along the rail. The rail is located in the upper part of the facility, crosswise to the position of the vehicle. A hydraulic connection supplies water to the boom entrance in the area of each joint. At the other end of the booms, a flexible hose or tube is coupled, which ends in a pressure gun for washing of the vehicle.

However, there is a recurring problem with these devices, which is the need to include various connecting areas that may cause leaks of liquid, as well as being critical points, which jeopardise the smooth operation when the vehicle is being washed.

This invention describes a device that prevents the aforementioned problem by incorporating a single flexible hose which removes the need for all kinds of connections from the end to the fixed conduit of the facility.

### DESCRIPTION OF THE INVENTION

This invention describes a device for washing of vehicles in self-service facilities. The device comprises a boom with a rigid section connected to a rail by means of an element which can move along the rail. This element can be a rotating joint or a shaft in a crosswise position to the rail that comprises rotating joints at its ends.

The rigid section of the boom comprises a straight section, a curved section and a flexible section, which connects the straight section with the curved section and is sloping with regard to the horizontal, so that if there is more than one boom, they do not interfere with each other.

The invention presents a continuous flexible hose, which runs along the whole boom in such a way that one end of the flexible hose extends from the free end of the straight section to connect to a fixed hydraulic conduit in the facility by means of a joint, and the other end of the flexible hose extends from the free end of the curved section of the boom to connect to a cleaning element which may be, for example, a pressure gun, a lance or a brush.

To ensure better performance of the flexible hose, the free end of the curved section is bellmouthed, to prevent rubbing which might jeopardise the useful life of the flexible hose.

### BRIEF DESCRIPTION OF THE FIGURES

To complete the invention being described, and in order to help with better understanding of the characteristics of the invention, according to a preferred embodiment thereof, it is accompanied by a set of drawings in which the figures described below have been represented, for purely illustrative purposes and should not be construed as limiting:
- Figure 1 represents a rear view of the washing facility.
- Figure 2 represents a facility incorporating three booms.
- Figure 3 represents a side view of a complete boom.
- Figure 4 represents an enlarged view of the mouth of the boom through which the flexible hose emerges to be attached to a cleaning element.

Provided below is a list of the references used in the figures:
1. Boom
2. Straight section of the boom.
3. Curved section of the boom.
4. Flexible section of the boom.
5. Joint.
6. End mouth of the boom.
7. Flexible hose.
8. Rail.
9. Shaft.

### DESCRIPTION OF A PREFERRED EMBODIMENT OF THE INVENTION

This invention refers to a device for washing of vehicles in self-service facilities.

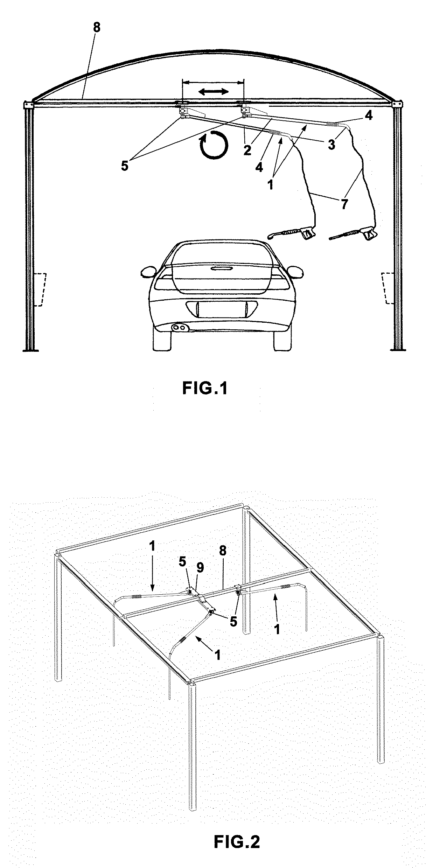

Figure 1 represents a washing facility comprising a tunnel which incorporates in the ceiling a rail (8) along which two booms (1) move. Although it has not been represented in this embodiment, the facility may comprise just one boom (1) without affecting the invention. The rail (8) is positioned crosswise to the direction in which the vehicle moves. Each of the booms (1) is fixed to the rail (8) by means of a rotating joint (5) which allows the end of the boom (1), which is where the cleaning element is located, to reach any part of the vehicle being washed.

Figure 2 represents a second embodiment in which one of the joints (5) is replaced by a shaft (9) positioned crosswise to the rail (8). The shaft (9) incorporates a joint (5) at each of its ends, by means of which a boom (1) is fixed. Thus, this embodiment incorporates a device with three booms (1).

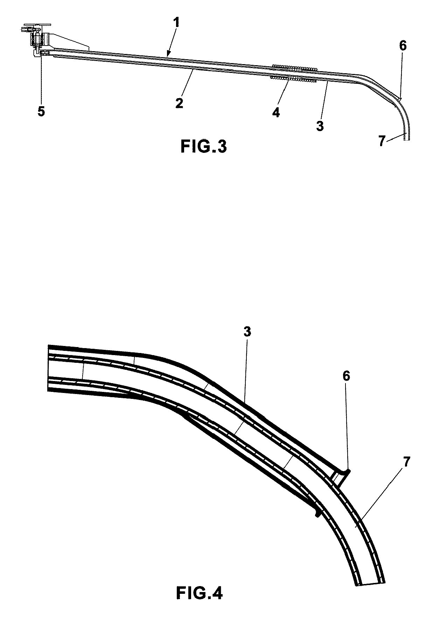

Figure 3 represents in detail a boom (1) of the device in this invention. It may be observed that the boom (1) comprises a straight section (2), a curved section (3) and a flexible section (4) which connects the straight section (2) to the curved section (3). A flexible hose (7) is positioned inside the different sections (2, 3, 4) of the boom (1), emerging from both ends. The flexible section (4) is a section with a spiral configuration that leaves free an internal diameter of sufficient dimensions to house the flexible hose (7). This flexible section (4) makes the boom (1) more agile, allowing the curved section to rotate independently of the straight section (2).

The free end of the straight section (2) of the boom (1) is attached to a rotating joint (5). The joint (5) is fixed on a rail (8) along which it can move. At this end of the boom (1), the flexible hose (7) is attached to the fixed hydraulic conduit of the facility.

At the other end of the boom (1), the curved section (3) ends in a mouth (6) through which the flexible hose emerges (7). This detail is represented more clearly in figure 4. Because of the continuous movements experienced by the boom (1) during a washing process, the mouth (6) at the end is bellmouthed. This ensures that, when the boom (1) rotates, the flexible hose (7) suffers less when bending. At this end of the flexible hose (7), the washing element is installed, normally a pressure gun, but it may also be a brush, a lance or any other component for cleaning the vehicle.

The use of two booms (1) in the same facility means that the straight sections (2) of the booms (1) are rotated at a downward angle to the horizontal. This angle is sufficiently large to ensure that a boom (1) does not interfere with a second boom (1) and sufficiently small not to interfere with vehicles which are higher than normal.

The fixed hydraulic conduit in the facility incorporates a means to absorb the necessary increase in length caused by the movement of the booms (1) along the rail (8). Normally this is achieved by incorporating in the fixed conduit of the facility a rolled flexible hose that incorporates an automatic retraction system such as, for example, a mechanism with a spring.

The present invention is not limited by the embodiment disclosed herein. Other embodiments may be carried out by persons skilled in the art in light of this description. In consequence, the scope of the invention is defined by the following claims.

## Claims

1. Device for washing vehicles in self-service facilities which comprises a boom (1) with a rigid section attached to a rail (8) by means of an element which can move along the rail (8), in which said device is **characterised in that** the rigid section of the boom (1) comprises:
- a straight section (2),
- a flexible section (4) attached, at one of its ends, to the straight section (2),
- a curved section (3) attached, at one of its ends, to the free end of the flexible section (4),
wherein a continuous flexible hose (7) runs along all the sections (2, 3, 4) of the boom (1), in such a way that:
- one end of the flexible hose (7) emerges from the free end of the straight section (2) to connect to a fixed hydraulic conduit in the facility by means of the joint (5), and
- the other end of the flexible hose (7) emerges from the free end of the curved section (3) of the boom (1) to connect to a cleaning element.

2. Device for washing vehicles in self-service facilities, according to claim 1, **characterised in that** the element which can move along the rail (8) is a rotating joint (5).

3. Device for washing vehicles in self-service facilities, according to claim 1, **characterised in that** the element which can move along the rail (8) is a shaft (9) positioned crosswise to the rail (8) which comprises rotating joints (5) at its ends.

4. Device for washing vehicles in self-service facilities, according to any of the claims 1 to 3, **characterised in that** the end of the curved section (3) is bellmouthed.

5. Device for washing vehicles in self-service facilities, according to any of the previous claims, **characterised in that** the straight section (2) of the boom (1) is inclined with regard to the horizontal.

6. Device for washing vehicles in self-service facilities, according to any of the previous claims, **characterised in that** the cleaning element is to be selected among a pressure gun, a lance and a brush.
